Europäisches Patentamt

European Patent Office

Office européen des brevets

(19)

(11) **EP 1 460 248 B1**

(12) **FASCICULE DE BREVET EUROPEEN**

(45) Date de publication et mention
de la délivrance du brevet:
**30.11.2005   Bulletin 2005/48**

(51) Int Cl.⁷: **F02B 37/16**, F02B 39/10,
F02B 37/04

(21) Numéro de dépôt: **04290613.1**

(22) Date de dépôt: **05.03.2004**

(54) **Moteur suralimenté à turbo-compresseur électriquement assisté**

Aufgeladene Brennkraftmaschine mit elektrisch unterstüztem Turbolader

Supercharged engine having an electric assisted turbocharger

(84) Etats contractants désignés:
**AT BE BG CH CY CZ DE DK EE ES FI FR GB GR
HU IE IT LI LU MC NL PL PT RO SE SI SK TR**

(30) Priorité:  **13.03.2003  FR 0303107**

(43) Date de publication de la demande:
**22.09.2004   Bulletin 2004/39**

(73) Titulaire: **Peugeot Citroen Automobiles S.A.
78140 Vélizy Villacoublay (FR)**

(72) Inventeur: **Flamme, Emmanuel
1200 Bruxelles (BE)**

(74) Mandataire: **Hirsch & Associés
58, Avenue Marceau
75008 Paris (FR)**

(56) Documents cités:
**EP-A- 0 352 064          DE-C- 19 603 591
US-A- 5 577 385**

• **PATENT ABSTRACTS OF JAPAN vol. 017, no.
106 (M-1375), 4 mars 1993 (1993-03-04) & JP 04
295132 A (YANMAR DIESEL ENGINE CO
LTD;OTHERS: 01), 20 octobre 1992 (1992-10-20)**

## Description

L'invention concerne le domaine des moteurs à combustion interne et plus précisément la turbocompression dans de tels moteurs à combustion interne.

Un turbocompresseur est un dispositif formé d'une turbine et d'un compresseur entraîné en rotation par la turbine, à travers un arbre reliant la roue de turbine et la roue de compresseur; on utilise dans la suite les termes turbine ou compresseur pour désigner la roue de turbine ou la roue de compresseur. La turbine est disposée sur le trajet des gaz d'échappement d'un moteur à combustion interne et est entraînée en rotation par les gaz s'échappant du moteur. Le compresseur est disposé sur le trajet d'admission d'air dans le moteur. Il compresse l'air injecté dans le moteur, permettant une suralimentation du moteur par rapport à un régime d'admission à la pression atmosphérique.Les moteurs suralimentés à l'aide d'un tel dispositif présentent l'inconvénient d'avoir un temps de réponse non nul sur la montée en couple du moteur. Ce temps de réponse est dû à la montée en vitesse de l'ensemble tournant du turbocompresseur - roue de turbine, arbre et roue de compresseur - qui ne se fait pas de manière instantanée. Il en résulte un délai dans l'apparition du couple développé par le moteur en réponse à une commande d'accélération de régime.

Une solution est connue pour répondre à ce problème de temps de réponse de la montée en couple d'un moteur suralimenté par turbocompresseur. Elle consiste à assister électriquement le turbocompresseur, en prévoyant un moteur électrique sur l'arbre de l'ensemble tournant du turbocompresseur. Cette solution est connue sous l'acronyme EAT, de l'anglais "Electric Assist Turbocharger", soit turbocompresseur assisté électriquement. Lorsque le conducteur appuie sur l'accélérateur, de l'énergie électrique est ponctionnée sur le réseau de bord par le moteur électrique, pour entraîner l'ensemble tournant du turbocompresseur. Le couple additionnel généré par le moteur électrique accélère l'ensemble tournant et réduit le temps de montée en vitesse de ce dernier. La montée en couple du moteur suralimenté est plus rapide : le conducteur perçoit une montée franche du couple en réponse à une commande d'accélération. Cette solution permet en outre de récupérer une partie de l'énergie contenue dans les gaz d'échappement, si le moteur électrique entraîné par la turbine peut fonctionner en mode générateur.

Un des problèmes de mise en oeuvre de cette solution est que le moteur électrique doit être accolé au carter de la turbine, qui peut atteindre des températures élevées - de l'ordre de 950°C.

Une autre solution connue consiste à disposer sur la ligne d'air une roue de compresseur entraînée par un moteur électrique, en série avec le turbocompresseur. Cette solution est connue sous le nom anglais Electric Booster ou Ebooster, soit pousseur électrique. Lorsque le conducteur appuie sur la pédale d'accélérateur dans une phase de demande de couple, le moteur électrique du pousseur est enclenché, ce qui produit une compression avec un temps de montée en régime bref par rapport à celui du turbocompresseur. Pendant la phase de montée en vitesse du turbocompresseur, le besoin en pression du moteur est assuré par le pousseur; lorsque le turbocompresseur a atteint son régime de croisière, le moteur du pousseur est arrêté. Comme la solution précédente, l'utilisation d'un pousseur électrique permet d'éviter un retard à la montée du couple lorsque la commande d'accélération est appliquée par le conducteur.

Cette solution ne présente pas les inconvénients d'un turbocompresseur assisté électriquement; toutefois, elle ne permet pas de récupérer l'énergie des gaz d'échappement.

DE-A-32 05 722 propose de remplacer la vanne papillon dans la ligne d'admission d'un moteur à combustion par une machine, pour éviter les pertes provoquées par cette vanne papillon. La machine est une machine électrique, qui est entraînée par le flux d'air lorsque le moteur fonctionne à une charge inférieure à la pleine charge atmosphérique. La machine fournit ainsi de l'énergie à la batterie du véhicule. Pour des charges supérieures, la machine est entraînée par le moteur électrique et agit comme chargeur. Cette solution permet d'éviter les pertes d'énergie cinétique provoquées par la vanne papillon. Le document montre aussi des modes de réalisation dans lesquels la machine est montée sur la ligne d'air en série ou en parallèle avec une vanne papillon : la présence d'une vanne papillon permet alors de mieux contrôler le flux d'air.

Il existe donc un besoin d'une solution simple, qui permette d'éviter, dans un moteur suralimenté, le retard à la montée en régime lorsque le conducteur appuie sur l'accélérateur.

Dans un mode de réalisation, l'invention propose donc un moteur suralimenté, comprenant

- un moteur à combustion interne avec une ligne d'air, une ligne d'échappement et une vanne sur la ligne d'air;
- un premier turbocompresseur avec une première turbine sur la ligne d'échappement et un premier compresseur sur la ligne d'air;
- un second turbocompresseur avec une seconde turbine sur la ligne d'air en parallèle à la vanne, un second compresseur sur la ligne d'air et un moteur électrique adapté à entraîner en rotation la seconde turbine et le second compresseur.

Le moteur peut en outre présenter une ou plusieurs des caractéristiques suivantes :

- le second compresseur est monté sur la ligne d'air en parallèle à une deuxième vanne;
- un clapet est monté en série avec la seconde turbine, l'ensemble du clapet et de la seconde turbine étant monté en parallèle à la vanne;

- le premier compresseur est sur la ligne d'air entre le second compresseur et le moteur à combustion interne;
- le second compresseur est sur la ligne d'air entre le premier compresseur et le moteur à combustion interne;
- un refroidisseur d'air d'admission est monté sur la ligne d'air en amont de la dérivation de la seconde turbine;
- un refroidisseur d'air d'admission est monté sur la ligne d'air en parallèle à la seconde turbine.

Dans un autre mode de réalisation, l'invention propose un véhicule automobile équipé d'un tel moteur suralimenté. Le véhicule peut présenter un circuit électrique principal relié au moteur électrique du moteur suralimenté. On peut aussi prévoir un circuit électrique principal et un deuxième circuit électrique relié au moteur électrique et comprenant au moins une batterie.

L'invention propose enfin un procédé d'exploitation d'un tel moteur suralimenté, comprenant l'étape d'entraînement en rotation de la première turbine par les gaz d'échappement et d'entraînement en rotation de la seconde turbine par l'air comprimé par le premier compresseur, le moteur électrique n'étant pas alimenté. On peut prévoir que l'étape d'entraînement en rotation comprend aussi l'ouverture de la deuxième vanne.

On peut encore prévoir une étape d'alimentation du moteur électrique, de préférence avec fermeture du clapet

D'autres caractéristiques et avantages de l'invention apparaîtront à la lecture de la description qui suit, donnée à titre d'exemple et en référence aux dessins qui montrent

- figure 1, une vue schématique d'un premier mode de réalisation d'un moteur selon l'invention ;
- figure 2, un diagramme des zones de fonctionnement du moteur de la figure 1;
- figures 3, 4 et 5, des vues schématiques similaires d'autres modes de réalisation de l'invention.

L'invention propose dans un moteur muni d'un turbocompresseur (ou premier turbocompresseur), d'utiliser un second turbocompresseur, assisté électriquement, dont la turbine et le compresseur sont montés sur la ligne d'admission d'air. A faible charge, la turbine du second turbocompresseur (ou seconde turbine) permet de récupérer de l'énergie sur le flux d'air d'admission. En montée en puissance, le moteur du second turbocompresseur est enclenché, de sorte que le compresseur du second turbocompresseur (ou second compresseur) assure la suralimentation du moteur pendant la période de montée en charge du premier turbocompresseur. Lorsque le premier turbocompresseur assure la suralimentation, le second turbocompresseur peut aussi permettre, au moins dans certains modes de réalisation, de récupérer de l'énergie.

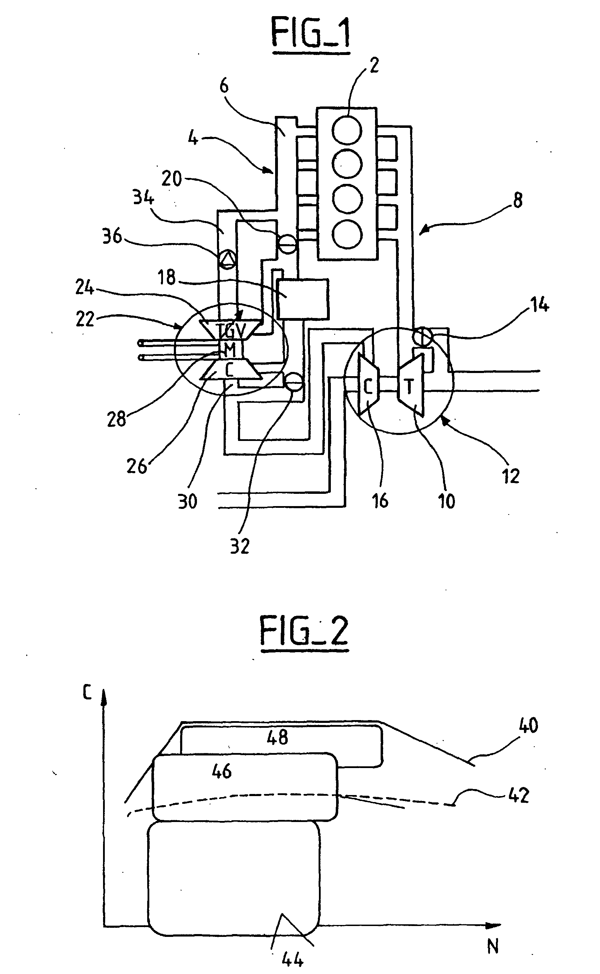

La figure 1 montre une vue schématique d'un premier mode de réalisation d'un moteur selon l'invention; ne sont représentés à la figure que les éléments utiles à la compréhension de l'invention. On reconnaît sur la figure le moteur 2 proprement dit, avec la ligne d'air 4, qui se termine par le répartiteur 6. Côté échappement, est prévue sur la ligne d'échappement 8 la turbine 10 du premier turbocompresseur 12, montée en parallèle avec une vanne d'échappement 14. Le compresseur 16 du turbocompresseur 12 est disposé sur la ligne d'air et est entraîné par la turbine 10, comme cela est connu en soi. On a encore représenté sur la ligne d'air 4 le refroidisseur d'air d'admission 18 ainsi que la vanne papillon 20.

La figure montre encore le turbocompresseur assisté électriquement 22, qui comprend une seconde turbine 24, un second compresseur 26 et un moteur 28. Dans l'exemple de la figure 1, le second compresseur est monté sur la ligne d'air 4 en série entre le premier compresseur 16 et le refroidisseur d'air d'admission. 18. Les avantages de cette configuration sont discutés dans la suite. La figure montre encore que le second compresseur est monté en parallèle avec une première dérivation 30, dans laquelle est disposée une vanne 32 de court-circuit de compresseur secondaire. Cette vanne permet, comme décrit plus bas, de contrôler la proportion du flux d'air circulant à travers le second compresseur 26.

La seconde turbine 24 est montée sur une deuxième dérivation 34, en parallèle à la vanne papillon 20. Dans cette dérivation est disposé un clapet 36. Le clapet est réglé de sorte à présenter une perte de charge propre qui est plus grande que celle de la ligne d'air parallèle, lorsque la vanne papillon est ouverte. Dans l'exemple de la figure 1, la deuxième dérivation débouche en aval du refroidisseur d'air d'admission; autrement dit, l'entrée de la seconde dérivation se trouve entre le refroidisseur d'air d'admission 18 et la vanne papillon, tandis que la sortie de la seconde dérivation se trouve entre la vanne papillon 20 et le répartiteur 6.

La figure 2 montre un graphe de charge du moteur; est portée sur l'axe des abscisses le nombre de tours de rotation du moteur par minute. Sur l'axe des ordonnées est porté le couple fourni par le moteur. Sur le graphe est représentée la courbe 40 de pleine charge suralimentée, qui correspond au fonctionnement du moteur lorsque le premier turbocompresseur est en fonction, après la montée en charge. Le graphe montre aussi la courbe 42 de pleine charge atmosphérique, qui correspond à la charge maximale du moteur sans le turbocompresseur. La figure montre enfin trois zones de fonctionnement du moteur, référencée 44, 46 et 48.

La première zone de fonctionnement 44 correspond à un fonctionnement du moteur à faible charge. Dans ce cas, le second turbocompresseur est utilisé pour récupérer de l'énergie sur le flux de la ligne d'air 4. Le premier compresseur, comme dans le cas d'un moteur turbocompressé de l'état de la technique, comprime légèrement l'air de la ligne d'air, ce qui a un effet d'élévation de la pression de la ligne d'air, discuté plus bas.

La vanne de court-circuit du compresseur secondaire est ouverte. La vanne papillon est fermée ou laisse passer un faible flux d'air résiduel. Dans la mesure où la vanne papillon est fermée ou ne laisse passer qu'un flux d'air résiduel, le clapet 36 est ouvert. Le flux d'air passe donc par la deuxième dérivation et entraîne en rotation la seconde turbine. Le moteur 28 du second turbocompresseur fonctionne comme générateur et fournit une puissance, qui peut être utilisée pour le chargement de la batterie principale du véhicule. Ceci a pour effet de décharger l'alternateur et permet de compenser les appels de courant pour l'alimentation du moteur du second turbocompresseur dans la deuxième zone de fonctionnement décrite plus bas.

La rotation du second compresseur n'a pas d'effets de compression de l'air dans la ligne d'air 4, dans la mesure où la vanne de court-circuit 32 est ouverte; ceci a aussi pour conséquence que la puissance absorbée par la rotation du second compresseur est faible.

Du fait de la détente de l'air entraînant la seconde turbine, la pression dans le répartiteur est en dessous de la pression ambiante et le moteur peut être alimenté avec le débit d'air adapté aux faibles charges. Dans cette première zone de fonctionnement, le débit moteur peut être réglé par l'ouverture du distributeur à géométrie variable de la seconde turbine et / ou par l'ouverture plus ou moins importante de la vanne papillon.

Dans ce mode de fonctionnement, l'énergie récupérable par la seconde turbine croît lorsque le rapport de détente augmente. La relation entre la puissance récupérable au niveau de la seconde turbine et le rapport de détente est la suivante :

$$W_{turbine} = d.T.C.\eta \cdot \left(1 - \left(\frac{P_6}{P_{16}}\right)^{\frac{1-\gamma}{\gamma}}\right)$$

avec d le débit dans la ligne d'air, T la température en entrée de la seconde turbine, C la capacité calorifique de l'air, $\eta$ le rendement de la turbine, $P_{16}$ la pression en sortie du premier compresseur 16, $P_6$ la pression dans le répartiteur et $\gamma$ le rapport de chaleurs spécifique de l'air. Cette formule montre que la puissance récupérée dans la turbine est une fonction du rapport de détente dans la seconde turbine.

L'énergie récupérée par la turbine dans ce mode de fonctionnement a pour origine d'une part l'énergie de détente de l'air à pression ambiante dans la seconde turbine. Elle a aussi d'autre part pour origine la récupération d'une partie de l'énergie des gaz d'échappement, qui produisent grâce au compresseur principal une élévation de la pression dans la ligne d'air. La présence du second turbocompresseur assisté électriquement permet donc une récupération d'énergie lors de la détente d'air à l'admission et lors de la détente à l'échappement. L'invention permet donc, dans ce premier mode de fonctionnement, de récupérer une parte de l'énergie de détente des gaz d'échappement, même lorsqu'il n'est pas nécessaire de comprimer l'air d'admission.

En outre, l'entraînement de la seconde turbine dans cette première zone de fonctionnement a aussi l'avantage de maintenir en rotation l'ensemble tournant du second turbocompresseur; une telle mise en vitesse est favorable, car elle limite l'énergie nécessaire pour accélérer l'ensemble tournant du second turbocompresseur lors de la montée en régime de la seconde zone de fonctionnement, décrite ci-dessous. En termes d'énergie cinétique, l'énergie cinétique résultant de la pré-rotation - fournie par les gaz d'échappement - n'aura pas à être dépensée pour la mise en rotation de l'ensemble tournant. Ceci limite le pic de courant présent dans les pousseurs de l'état de la technique, au début de l'accélération.

La seconde zone de fonctionnement 46 de la figure 2 correspond à la montée en puissance du moteur, lorsque le conducteur appuie sur l'accélérateur. Dans ce cas, dans l'état de la technique se produit le problème de délai dans la fourniture du couple, du fait de l'accélération progressive du premier turbocompresseur. Pour pallier ce problème, dans l'exemple de la figure 1, le second turbocompresseur assisté électriquement est entraîné par le moteur, de sorte à assurer la compression de l'air dans la ligne d'air. Dans cette zone de fonctionnement, la vanne de court-circuit 32 du second compresseur 36 est fermée. Ainsi, la rotation du second compresseur sous l'effet du moteur contribue à la montée en pression dans le répartiteur, en complément de la montée en pression du fait du premier compresseur.

Comme l'appui sur l'accélérateur ouvre la vanne papillon, le clapet 36 de la seconde turbine se ferme, sa perte en charge étant supérieure à celle de la ligne d'air principale lorsque la vanne papillon s'ouvre. La seconde turbine est court-circuitée et de ce fait le couple résistif de la seconde turbine est faible, le débit étant nul. On évite ainsi d'augmenter la consommation électrique du second turbocompresseur dans ce mode de fonctionnement.

Lorsque le premier turbocompresseur monte en charge, il se rapproche de sa consigne de fonctionnement et devient capable d'assurer la suralimentation du moteur. La compression assurée par le second turbocompresseur est alors diminuée, en contrôlant l'alimentation du moteur 28. L'alimentation électrique du second turbocompresseur s'arrête lorsque la vitesse de rotation du premier turbocompresseur est suffisante pour assurer la suralimentation. La vanne de court-circuit 32 du second compresseur s'ouvre alors et l'on passe dans la troisième zone de fonctionnement 48 représentée sur la figure 2.

Le passage de la première zone de fonctionnement à la seconde zone de fonctionnement peut simplement résulter d'une détection de l'ouverture de la vanne papillon ou de la détection d'une action sur la pédale d'accélération. La représentation de la figure 2 est schématique et le graphique pourrait être simplifié pour que ces deux zones soient distinctes.

Dans la troisième zone de fonctionnement 48 de la figure 2, la vanne de court-circuit du second compresseur est ouverte, de sorte que l'air passe dans la ligne d'air et non pas dans le second compresseur. Comme la vanne papillon est ouverte, le clapet de la dérivation de la seconde turbine est fermé. La turbine comme le compresseur du turbocompresseur assisté électriquement sont donc court-circuités et le moteur fonctionne comme un moteur suralimenté classique.

Dans l'exemple de la figure 1, il est en outre possible de récupérer encore une partie de l'énergie de détente des gaz d'échappement, du fait de la position de la seconde turbine en aval de la première turbine sur la ligne d'air 4. En effet, pour les fortes charges du moteur, dans un moteur suralimenté de l'état de la technique, la vanne d'échappement 14 est ouverte; ceci évite la compression trop importante de l'air dans la ligne d'air qui pourrait avoir lieu si l'ensemble du débit d'échappement traversait la turbine du premier turbocompresseur.

Pour de telles charges, il est possible dans l'exemple de la figure 1 de fermer la vanne d'échappement. Ceci a pour effet d'augmenter la vitesse de rotation du premier turbocompresseur, au-delà de la vitesse nécessaire pour assurer la compression de l'air dans la ligne d'air. Pour maintenir la pression d'air appropriée dans le répartiteur, on ferme alors la vanne papillon. Comme dans la première zone de fonctionnement, l'air est alors détendu dans la seconde turbine, dont le clapet s'ouvre; le moteur de la seconde turbine est entraîné et fonctionne en générateur; dans la mesure où la vanne de court-circuit du second compresseur est ouvert, la rotation du second compresseur ne consomme pas l'énergie du second turbocompresseur et ne provoque pas de compression supplémentaire. On peut adapter la détente induite par la seconde turbine en fermant plus ou moins la vanne papillon.

Cette solution permet ainsi de récupérer encore une partie de l'énergie des gaz d'échappement aux fortes charges du moteur. En outre, cette solution permet de refroidir l'air d'admission en deux étapes : l'air est d'abord refroidi dans le refroidisseur d'air d'admission 18 - qui est en aval de la seconde dérivation - puis est refroidi par détente dans la seconde turbine. On garantit ainsi une température d'air plus faible encore que celle que l'on aurait obtenu avec le seul refroidisseur d'air d'admission; cette diminution de la température d'air à l'admission favorise la combustion du moteur et diminue donc la consommation de ce dernier pour un couple donné.

La présence du second turbocompresseur, assisté électriquement permet ainsi, aux faibles charges, de récupérer une partie de l'énergie des gaz d'échappement; lors de la montée en puissance, le second turbocompresseur évite le délai entre la commande d'accélération et la montée du couple. Enfin, aux fortes charges, le second turbocompresseur soit est transparent pour le fonctionnement du moteur, soit permet de récupérer une partie de l'énergie des gaz d'échappement avec une diminution de la consommation du moteur.

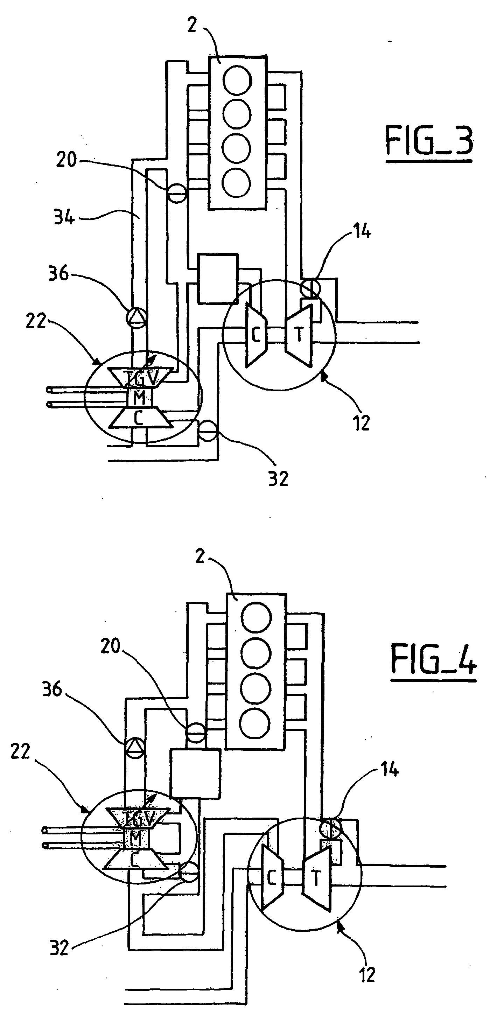

La figure 3 montre une représentation schématique, analogue à celle de la figure 1, d'un autre exemple d'implantation du second turbocompresseur assisté électriquement. A la différence de l'exemple de la figure 1, la vanne de court-circuit et la dérivation contenant le compresseur secondaire sont montées sur la ligne d'air en amont du premier compresseur. Cette solution présente l'avantage de pouvoir améliorer non seulement la modularité d'implantation mais aussi de garantir que le compresseur secondaire est en contact avec de l'air froid pour améliorer le refroidissement de l'ensemble. Du point de vue de la compression de l'air dans la seconde zone de fonctionnement - montée en couple - l'ordre des deux compresseurs a peu d'influence sur le rendement global du système. La position relative des deux compresseurs n'a donc pas une influence prépondérante sur la consommation en puissance électrique ou sur le temps de réponse dans la montée en charge. Dans les autres modes de fonctionnement du moteur, la vanne de court-circuit du second compresseur est en position ouverte et la position du second compresseur est donc indifférente.

La figure 4 montre une représentation schématique, analogue à celle de la figure 1, d'un autre exemple d'implémentation du second turbocompresseur assisté électriquement. A la différence de l'exemple de la figure 1, la dérivation contenant la seconde turbine et son clapet est montée sur la ligne d'air en parallèle au refroidisseur d'air d'admission; autrement dit, l'entrée de la dérivation de la seconde turbine 24 est en amont du refroidisseur d'air d'admission. Cette solution permet de récupérer plus d'énergie au niveau de la turbine secondaire puisque l'air n'est pas refroidi par le RAS. En effet, nous savons d'après la formule de la turbine que la puissance fournie est directement proportionnelle à la température de l'air en amont de cette dernière. Fonctionnellement, l'exemple de la figure 4 est équivalent à celui de la figure 1, sauf pour ce qui est du refroidissement de l'air d'admission; de fait, lorsque la vanne papillon est fermée et que l'air passe dans la seconde turbine, il ne traverse pas le refroidisseur d'air d'admission. Ceci limite l'efficacité du refroidissement dans la première et dans la troisième zone de fonctionnement, si l'on ferme la vanne d'échappement pour récupérer une partie de l'énergie des gaz d'échappement. La perte de charge générée dans le refroidisseur d'air d'admission est minime pour les faibles débits d'air et il n'est donc pas gênant qu'il soit montée en série avec la seconde turbine comme dans l'exemple de la figure 1.

Si la détente dans la deuxième turbine est suffisante pour refroidir l'air d'admission, l'absence de passage dans le refroidisseur d'air d'admission n'est pas dirimante. Cette implantation a cependant le défaut de ne pas pouvoir sur-refroidir l'air admission dans le troisième mode de fonctionnement comme les configurations 1 et 3 puisqu'il n'y a plus la possibilité de détendre l'air et donc de le refroidir au travers de la turbine secondaire après le refroidisseur d'air secondaire.

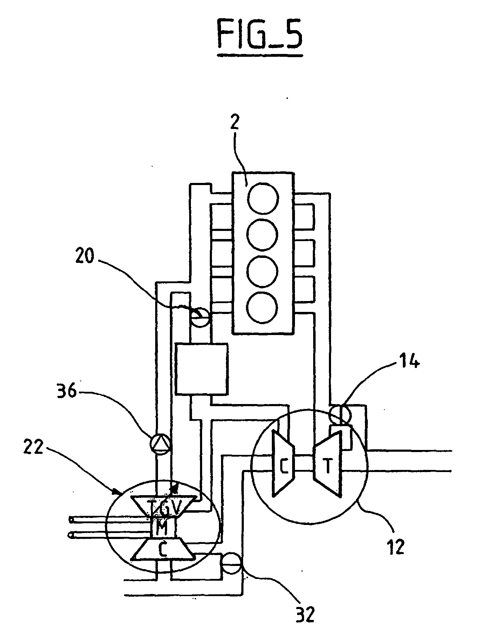

La figure 5 montre une représentation schématique, analogue à celle de la figure 1, d'un autre exemple d'implémentation du second turbocompresseur assisté électriquement. Dans l'exemple de la figure 5, le second compresseur est monté comme à la figure 3, tandis que la seconde turbine est montée comme à la figure 4. Les avantages et les défauts de l'exemple de la figure 5 se déduisent donc de la discussion des exemples des figures 3 et 4 ci-dessus.

Dans tous les exemples, les premier et second compresseurs 16 et 22 se trouvent sur la ligne d'air 4 en amont du refroidisseur d'air d'admission sur la ligne d'air 4. Cette configuration est avantageuse du point de vue du rendement moteur, dans la mesure où elle évite un échauffement de l'air par compression après le refroidisseur. Dans tous les exemples, la dérivation de la turbine 24 du second turbocompresseur 22 est après le compresseur 16 du premier turbocompresseur 12; cette implantation permet de récupérer l'énergie des gaz d'échappement, comme expliqué plus haut en référence aux première et troisième zones de fonctionnement du moteur. Toutefois, on pourrait disposer la turbine 24 du second turbocompresseur 22 avant le compresseur 16 du premier turbocompresseur 12; cette configuration permettrait encore de fournir une solution au problème du délai à la montée en régime du moteur; on ne pourrait toutefois plus récupérer l'énergie des gaz d'échappement.

Dans tous les exemples décrits en référence aux figures, l'énergie récupérée sur les gaz d'échappement peut être utilisée pour décharger l'alternateur et / ou pour compenser l'énergie absorbée par le second turbocompresseur dans la seconde zone de fonctionnement. La première solution permet de réduire la consommation d'un véhicule en cycle urbain; en effet, le moteur fonctionne essentiellement dans la première zone de fonctionnement. Le second turbocompresseur 22 peut alors assurer une partie de la fourniture d'électricité du réseau de bord à la place de l'alternateur. De plus, si l'alternateur est réversible, cette énergie peut être récupérée lorsque l'alternateur fonctionne en mode moteur.

La seconde solution permet de récupérer partiellement au cours d'une phase de freinage moteur l'énergie électrique consommée au cours d'une phase de montée en couple du moteur pour l'alimentation du turbocompresseur assisté électriquement. En effet, lorsqu'un moteur est utilisé en mode de freinage, il fonctionne aux faibles charges - la charge étant même négative. Le moteur fonctionne dans ce cas dans la première zone de fonctionnement de la figure 2. L'énergie récupérable au cours de ce mode de fonctionnement n'est pas négligeable, dans la mesure où la rotation forcée du moteur conduit à des débits d'air à détendre relativement importants dans la ligne d'admission.

Il est possible de relier le moteur du second turbocompresseur à un réseau électrique indépendant du réseau principal du véhicule. Ce réseau peut comprendre une simple batterie, et le cas échéant d'autres éléments; cette solution présente l'avantage de permettre de concevoir le réseau principal d'alimentation sans intégrer les contraintes d'alimentation électrique du second turbocompresseur. On évite par exemple de devoir gérer les variations de courant nécessaires à l'alimentation du second turbocompresseur. En outre, un réseau indépendant permet de choisir plus librement la tension de consigne : une tension de consigne de 14 V est classique pour le réseau électrique principal d'un véhicule. Si le réseau d'alimentation du second turbocompresseur est indépendant, on peut utiliser une tension de consigne plus importante - par exemple 24 V, 36 V, voire 48 V. Une tension de consigne plus importante est plus favorable au dimensionnement du moteur électrique du second turbocompresseur.

Bien entendu, l'invention n'est pas limitée aux modes de réalisation donnés plus haut. Ainsi, on utilise dans les modes de réalisation décrits un clapet dans la seconde dérivation. L'utilisation d'un tel clapet taré en fonction de la perte en charge dans la ligne principale parallèle à la seconde dérivation évite de prévoir une vanne supplémentaire; toutefois, on pourrait aussi utiliser un simple vanne, commandée en fonction de l'ouverture de la vanne papillon voire même indépendamment de celle-ci. De même, on a décrit une solution dans laquelle le second compresseur comme la seconde turbine sont monté dans des dérivations de la ligne d'air; on pourrait modifier la forme du montage, par exemple en montant la vanne de court-circuit dans une dérivation et le second compresseur dans la ligne d'air, sans que ceci ne change le fonctionnement des exemples décrits ci-dessus. Il en est de même de la seconde turbine et de son clapet : on pourrait disposer la vanne papillon dans une dérivation et la seconde turbine et son clapet dans la ligne d'air principale.

Dans l'exemple décrit, on a considéré le cas d'une turbine du second compresseur présentant un distributeur à géométrie variable; un tel distributeur permet de contrôler le débit passant par la seconde turbine et de réguler en conséquence le débit d'air arrivant dans le distributeur. On peut aussi contrôler le débit d'air par la maîtrise de la vitesse de rotation de l'élément tournant du second turbocompresseur. On pourrait encore utiliser un clapet ou vanne comme moyen pour contrôler le débit, en alternance ou en complément des solutions décrites plus haut..

On a donné plus haut l'exemple d'une vanne papillon pour contrôler l'admission d'air dans la ligne d'air; on peut aussi utiliser d'autres moyens de contrôle, désignés génériquement sous le terme de "vanne".

Enfin, la détente des gaz au niveau de la seconde turbine s'accompagne d'un refroidissement de l'air; l'air détendu en sortie de la seconde turbine peut être utilisé pour assurer le refroidissement des composants électriques du moteur et de l'électronique de puissance.

| | |
|---|---|
| 2 | moteur |
| 4 | ligne d'air |
| 6 | répartiteur |
| 8 | ligne d'échappement |
| 10 | première turbine |
| 12 | premier turbocompresseur |
| 14 | vanne d'échappement |
| 16 | premier compresseur |
| 18 | refroidisseur d'air d'admission |
| 20 | vanne papillon |
| 22 | second turbocompresseur |
| 24 | seconde turbine |
| 26 | second compresseur; |
| 28 | moteur électrique |
| 30 | première dérivation (second compresseur) |
| 32 | vanne de court-circuit de compresseur secondaire |
| 34 | deuxième dérivation (seconde turbine) |
| 36 | clapet (seconde turbine) |
| 40 | courbe pleine charge suralimenté |
| 42 | courbe pleine charge atmosphérique |
| 44 | première zone de fonctionnement |
| 46 | deuxième zone de fonctionnement |
| 48 | troisième zone de fonctionnement |

**Revendications**

1. Un moteur suralimenté, comprenant

    - un moteur à combustion interne (2) avec une ligne d'air (4), une ligne d'échappement (8) et une vanne (20) sur la ligne d'air;
    - un premier turbocompresseur (12) avec une première turbine (10) sur la ligne d'échappement (8) et un premier compresseur (16) sur la ligne d'air;
    - un second turbocompresseur (22) avec une seconde turbine (24) sur la ligne d'air en parallèle à la vanne (20), un second compresseur (26) sur la ligne d'air et un moteur électrique (28) adapté à entraîner en rotation la seconde turbine et le second compresseur.

2. Le moteur de la revendication 1, **caractérisé en ce que** le second compresseur est monté sur la ligne d'air (4) en parallèle à une deuxième vanne (32).

3. Le moteur de la revendication 1 ou 2, **caractérisé** **en ce qu'**il comprend un clapet (36) en série avec la seconde turbine (24), l'ensemble du clapet et de la seconde turbine étant monté en parallèle à la vanne (20).

4. Le moteur de la revendication 1, 2 ou 3, **caractérisé en ce que** le premier compresseur (16) est sur la ligne d'air (4) entre le second compresseur (26) et le moteur à combustion interne (2).

5. Le moteur de la revendication 1, 2 ou 3, **caractérisé en ce que** le second compresseur (26) est sur la ligne d'air (4) entre le premier compresseur (16) et le moteur à combustion interne (2).

6. Le moteur de l'une des revendications 1 à 5, **caractérisé en ce qu'**il présente un refroidisseur d'air d'admission (18) monté sur la ligne d'air en amont de la dérivation de la seconde turbine (24).

7. Le moteur de l'une des revendications 1 à 5, **caractérisé en ce qu'**il présente un refroidisseur d'air d'admission (18) monté sur la ligne d'air en parallèle à la seconde turbine (24).

8. Un véhicule automobile, comprenant un moteur selon l'une des revendications 1 à 7.

9. Le véhicule de la revendication 8, **caractérisé en ce qu'**il comprend un circuit électrique principal relié au moteur électrique (28).

10. Le véhicule de la revendication 8, **caractérisé en ce qu'**il comprend un circuit électrique principal et un deuxième circuit électrique relié au moteur électrique (28) et comprenant au moins une batterie.

11. Un procédé d'exploitation d'un moteur suralimenté selon l'une des revendications 1 à 7, comprenant l'étape d'entraînement en rotation de la première turbine (10) par les gaz d'échappement et d'entraînement en rotation de la seconde turbine (24) par l'air comprimé par le premier compresseur (16), le moteur électrique (28) n'étant pas alimenté.

12. Le procédé de la revendication 11, **caractérisé en ce que** l'étape d'entraînement en rotation comprend aussi l'ouverture de la deuxième vanne.

13. Le procédé de la revendication 11 ou 12, **caractérisé par** une étape d'alimentation du moteur électrique (28).

14. Le procédé de la revendication 13, **caractérisé en ce que** l'étape d'alimentation comprend la fermeture du clapet (36)

**Patentansprüche**

**1.** Aufgeladener Motor, umfassend

eine Brennkraftmaschine (2) mit einem Lufteinlasskanal (4), einem Auslasskanal (8) und einem Ventil (20) am Lufteinlasskanal;

einen ersten Turbolader (12) mit einer ersten Turbine (10) an der Auspuffleitung (8) und einem ersten Verdichter (16) am Lufteinlasskanal;

einen zweiten Turbolader (22) mit einer zweiten Turbine (24) am Lufteinlasskanal parallel zum Ventil (20), einen zweiten Verdichter (26) am Lufteinlasskanal und einen Elektromotor (28), welcher angebracht ist, die Rotation der zweiten Turbine und des zweiten Verdichters zu bewirken.

**2.** Motor nach Anspruch 1, **dadurch gekennzeichnet, dass** der zweite Verdichter am zweiten Lufteinlasskanal (4) parallel zu einem zweiten Ventil (32) eingebaut ist.

**3.** Motor nach Anspruch 1 oder 2, **dadurch gekennzeichnet, dass** er eine Drosselklappe (36) in Serie zu der zweiten Turbine (24) umfasst, wobei die Gesamtheit von Drosselklappe und der zweiten Turbine parallel zum Ventil (20) eingebaut ist.

**4.** Motor nach einem der Ansprüche 1, 2 oder 3, **dadurch gekennzeichnet, dass** der erste Verdichter (16) sich am Lufteinlasskanal (4) zwischen dem zweiten Verdichter (26) und der Brennkraftmaschine (2) befindet.

**5.** Motor nach einem der Ansprüche 1, 2 oder 3, **dadurch gekennzeichnet, dass** der zweite Verdichter (26) sich am Lufteinlasskanal (4) zwischen dem ersten Verdichter (16) und der Brennkraftmaschine (2) befindet.

**6.** Motor nach einem der Ansprüche 1 bis 5, **dadurch gekennzeichnet, dass** er einen Einlassluftkühler (18) aufweist, welcher am Lufteinlasskanal oberhalb der Abzweigung der zweiten Turbine (24) eingebaut ist.

**7.** Motor nach einem der Ansprüche 1 bis 5, **dadurch gekennzeichnet, dass** er einen Einlassluftkühler (18) aufweist, welcher am Lufteinlasskanal parallel zur zweiten Turbine (24) eingebaut ist.

**8.** Kraftfahrzeug, welches einen Motor nach einem der Ansprüche 1 bis 7 umfasst.

**9.** Fahrzeug nach Anspruch 8, **dadurch gekennzeichnet, dass** es einen Hauptstromkreis umfasst, welcher mit einem Elektromotor (28) verschaltet ist.

**10.** Fahrzeug nach Anspruch 8, **dadurch gekennzeichnet, dass** er einen Hauptstromkreis und einen zweiten Stromkreis umfasst, welcher mit dem Elektromotor (28) verbunden ist, und mindestens eine Batterie umfasst.

**11.** Verfahren zum Betrieb eines aufgeladenen Motors nach einem der Ansprüche 1 bis 7, welches eine Antriebsphase zur Rotation der ersten Turbine (10) durch die Abgase und eine Antriebsphase zur Rotation der zweiten Turbine (24) durch die durch den ersten Verdichter (16) komprimierten Luft umfasst, wobei der Elektromotor (28) nicht betrieben wird.

**12.** Verfahren nach Anspruch 11, **dadurch gekennzeichnet, dass** die Antriebsphase zur Rotation auch die Öffnung des zweiten Ventils umfasst.

**13.** Verfahren nach Anspruch 11 oder 12, **gekennzeichnet durch** eine Phase der Stromversorgung des Elektromotors (28).

**14.** Verfahren nach Anspruch 13, **dadurch gekennzeichnet, dass** die Phase der Stromversorgung das Schließen der Drosselklappe (36) umfasst.

**Claims**

**1.** A supercharged engine comprising:

- an internal combustion engine (2) with an air conduit (4), an exhaust conduit (8) and a valve (20) in the air conduit;
- a first turbocharger (12) with a first turbine (10) in the exhaust conduit (8) and a first compressor (16) in the air conduit;
- a second turbocharger (22) with a second turbine (24) in the air conduit in parallel with the valve (20), a second compressor (26) in the air conduit and an electric motor (28) adapted to drive the second turbine and the second compressor in rotation.

**2.** The engine according to claim 1, **characterized in that** the second compressor is mounted in the air conduit (4) in parallel with a second valve (32).

**3.** The engine according to claim 1 or 2, **characterized in that** it comprises a flap valve (36) in series with the second turbine (24), the assembly comprising the flap valve and second turbine being mounted in parallel with the valve (20).

**4.** The engine according to claim 1, 2 or 3, **characterized in that** the first compressor (16) is in the air conduit (4) between the second compressor (26) and the internal combustion engine (2).

**5.** The engine according to claim 1, 2 or 3, **characterized in that** the second compressor (26) is in the air conduit (4) between the first compressor (16) and the internal combustion engine (2).

**6.** The engine according to one of claims 1-5, **characterized in that** it has an inlet air cooler (18) mounted in the air conduit upstream of the branch for the second turbine (24).

**7.** The engine of one of Claims 1-5, **characterized in that** it has an inlet air cooler (18) mounted in the air conduit in parallel with the second turbine (24).

**8.** An automobile vehicle comprising an engine according to one of claims 1-7.

**9.** The vehicle of claim 8, **characterized in that** it comprises a main electrical circuit connected to the electric motor (28).

**10.** The vehicle of claim 8, **characterized in that** it comprises a main electrical circuit and a second electrical circuit connected to the electric motor (28) and comprising at least a battery.

**11.** A method for operating a supercharged engine according to one of claims 1-7, comprising the step of driving the first turbine (10) in rotation by means of the exhaust gas and driving the second turbine (24) in rotation using the air compressed by the first compressor (16), the electric motor (28) not being powered.

**12.** The method according to claim 11, **characterized in that** the step of driving in rotation also comprises opening of the second valve.

**13.** The method of claim 11 or 12, **characterized by** a step of powering said electric motor (28).

**14.** The method of claim 13, **characterized in that** the said powering step includes closing the flap valve (36).

EP 1 460 248 B1

## FIG_1

## FIG_2

FIG_3

FIG_4

# FIG_5